(19) Europäisches Patentamt
European Patent Office
Office européen des brevets

(11) EP 1 613 703 B1

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(21) Anmeldenummer: **04724273.0**

(22) Anmeldetag: **30.03.2004**

(51) Int Cl.:
*C09C 3/10* (2006.01) *C09C 1/02* (2006.01)

(86) Internationale Anmeldenummer:
**PCT/EP2004/003347**

(87) Internationale Veröffentlichungsnummer:
**WO 2004/087818 (14.10.2004 Gazette 2004/42)**

(54) **WÄSSRIGE ANSCHLÄMMUNGEN VON FEINTEILIGEN FÜLLSTOFFEN, VERFAHREN ZU IHRER HERSTELLUNG UND IHRE VERWENDUNG ZUR HERSTELLUNG FÜLLSTOFFHALTIGER PAPIERE**

AQUEOUS ELUTRIATIONS OF FINE-PARTICLED FILLING MATERIALS, METHODS FOR THE PRODUCTION THEREOF AND USE THEREOF IN THE PRODUCTION OF PAPER CONTAINING FILLING MATERIALS

ELUTRIATIONS AQUEUSES DE MATIERES DE CHARGE A FINES PARTICULES, LEUR PROCEDE DE PRODUCTION ET LEUR UTILISATION POUR LA PRODUCTION DE PAPIERS CONTENANT DES MATIERES DE CHARGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **03.04.2003 DE 10315363**

(43) Veröffentlichungstag der Anmeldung:
**11.01.2006 Patentblatt 2006/02**

(73) Patentinhaber: **BASF Aktiengesellschaft**
**67056 Ludwigshafen (DE)**

(72) Erfinder:
- **ESSER, Anton**
  **68199 Mannheim (DE)**
- **BRAIG, Volker**
  **68526 Ladenburg (DE)**
- **WENDKER, Martin**
  **67549 Worms (DE)**
- **BLUM, Rainer**
  **68307 Mannheim (DE)**
- **BAUMANN, Peter**
  **67459 Böhl-Iggelheim (DE)**
- **NEUTZNER, Josef**
  **67434 Neustadt (DE)**
- **DUPUIS, Jacques**
  **68775 Ketsch (DE)**
- **HÄHNLE, Hans-Joachim**
  **67435 Neustadt (DE)**

(56) Entgegenhaltungen:
**EP-A- 0 672 212** **WO-A-00/17250**
**WO-A-01/29106**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 613 703 B1

Printed by Jouve, 75001 PARIS (FR)

## Beschreibung

Die Erfindung betrifft wäßrige Anschlämmungen von feinteiligen Füllstoffen, die zumindest teilweise mit Polymerisaten überzogen sind. Verfahren zu ihrer Herstellung und ihre Verwendung als Zusatz zum Papierstoff bei der Herstellung von füllstoffhaltigem Papier, füllstoffhaltigem Karton und füllstoffhaltiger Pappe.

Aus der EP-B-0 251 182 ist u.a. ein Verfahren zur Herstellung von Polymeren bekannt, wobei man eine Mischung von N-Vinylformamid und Acrylnitril oder Methacrylnitril in Gegenwart von Radikale bildenden Initiatoren polymerisiert und die Polymerisate anschließend durch Behandlung mit Säuren modifiziert. Die modifizierten Polymerisate enthalten Vinylamineinheiten in Form von Salzen, Vinylformamid- und Acrylnitril- bzw-Methacrylnitrileinheiten sowie gegebenenfalls Acrylamid- und Acrylsäureeinheiten. Die Nacharbeitung von Beispielen dieser Veröffentlichung hat jedoch ergeben, daß die mit Säuren hydrolysierten Polymerisate beträchtliche Mengen an Amidineinheiten der Formel

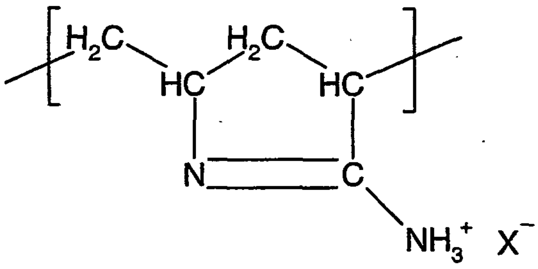

(I)

enthalten. Die hydrolysierten Polymerisate werden bei der Herstellung von Papier als Entwässerungsmittel, Retentionsmittel und zur Verfestigung von Papier verwendet.

Aus der EP-B-0 528 409 sind kationische Copolymerisate bekannt, die 20 bis 90 Mol-% Amidineinheiten enthalten. Sie werden durch Copolymerisation von N-Vinylformamid und Acrylnitril and anschließende Hydrolyse der Copolymerisate mit Säuren hergestellt. Die Amidineinheiten enthaltenden Polymeren werden als Flockungsmittel für Schlämme verwendet.

Gegenstand der EP-B-0 672 212 ist die Verwendung von Copolymerisaten, die durch Copolymerisation von N-Vinylcarbonsäureamiden, monoethylenisch ungesättigten Carbonsäuren und gegebenenfalls Vinylacetat, N-Vinylpyrrolidon und/oder N-Vinylimidazol und gegebenenfalls Monomeren mit mindestens zwei Doppelbindungen im Molekül und anschließende teilweise oder vollständige Hydrolyse der in den Copolymerisaten enthaltenen Vinylcarbonsäureamideinheiten zu Amin- bzw. Ammoniumgruppen erhältlich sind, bei der Papierherstellung als Zusatz zum Papierstoff zur Erhöhung der Entwässerungsgeschwindigkeit und der Retention sowie der Trocken- und Nassfestigkeit des Papiers. Wie Analysen ergeben haben, enthalten hydrolysierte Copolymerisate aus N-Vinylformamid und Acrylsäure beträchtliche Mengen an Amidineinheiten der Formel

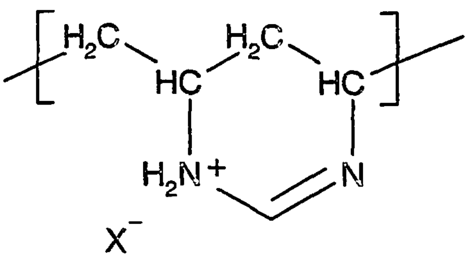

(II),

in der $X^-$ ein Anion bedeutet.

Aus der JP-A-08059740 ist bekannt, daß man zu wässrigen Suspensionen von anorganischen Teilchen amphotere wasserlösliche Polymeren zusetzt, wobei zumindest ein Teil der Polymeren auf der Füllstoffoberfläche adsorbiert wird. Die amphoteren Polymeren werden vorzugsweise durch Hydrolysieren von Copolymerisaten aus N-Vinylformamid, Acrylnitril und Acrylsäure in Gegenwart von Säuren hergestellt. Sie enthalten 20 bis 90 Mol-% Amidineinheiten der Struktur

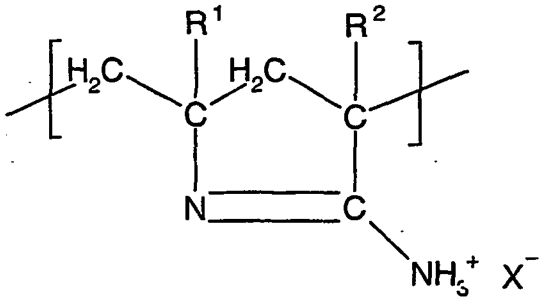

(I)

in der $R^1$ und $R^2$ jeweils H oder eine Methylgruppe und $X^-$ ein Anion bedeuten. Die mit solchen Polymeren behandelten Füllstoffslurries werden bei der Herstellung von füllstoffhaltigen Papieren dem Papierstoff zugesetzt. Die Füllstoffbehandlung führt zu einer Verbesserung der Entwässerung des Papierstoffs und ergibt außerdem eine Verbesserung verschiedener Festigkeitseigenschaften des getrockneten Papiers sowie eine Verbesserung der Füllstoffretention.

In der US-A-2002/0088579 wird die Vorbehandlung von anorganischen Füllstoffen mit kationischen, anionischen und amphoteren (zwitterionischen) Polymeren beschrieben.

Die Behandlung besteht dabei in jedem Fall aus mindestens zwei Stufen. Empfohlen wird zuerst die Behandlung mit einem kationischen Polymer und anschließend die Behandlung mit einem anionischen Polymer. In weiteren Schritten können alternierend wieder weitere kationische und anionische Polymere adsorbiert werden. Die wässrigen Suspensionen mit den vorbehandelten Füllstoffteilchen werden bei der Herstellung von füllstoffhaltigem Papier dem Papierstoff zugesetzt. Die Füllstoffbehandlung führt zu einer Verbesserung verschiedener Festigkeitseigenschaften des getrockneten Papiers.

Der Erfindung liegt die Aufgabe zugrunde, weitere wässrige Anschlämmungen von feinteiligen Füllstoffen zur Verfügung zu stellen, die bei der Papierherstellung einsetzbar sind.

Die Aufgabe wird erfindungsgemäß gelöst mit wässrigen Anschlämmungen von feinteiligen Füllstoffen, die zumindest teilweise mit Polymerisaten überzogen sind, wobei die Anschlämmungen erhältlich sind durch Behandeln von wässrigen Anschlämmungen feinteiliger Füllstoffe mit mindestens einem wasserlöslichen amphoteren Copolymerisat, das erhältlich ist durch Copolymerisieren von

(a) mindestens einem N-Vinylcarbonsäureamid der Formel

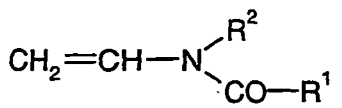

(III),

in der $R^1$, $R^2$ = H oder $C_1$- bis $C_6$-Alkyl bedeuten,

(b) mindestens einer monoethylenisch ungesättigten Carbonsäure mit 3 bis 8 C-Atomen im Molekül und/oder deren Alkalimetall-, Erdalkalimetall- oder Ammoniumsalzen und gegebenenfalls

(c) anderen monoethylenisch ungesättigten Monomeren, die frei von Nitrilgruppen sind und gegebenenfalls

(d) Verbindungen, die mindestens zwei ethylenisch ungesättigte Doppelbindungen im Molekül aufweisen,

und anschließende teilweise oder vollständige Abspaltung der Gruppen $-CO-R^1$ aus den in das Copolymerisat einpolymerisierten Monomeren III.

Die wäßrigen Anschlämmungen enthalten beispielsweise 1 bis 50 Gew.-%, vorzugsweise 10 bis 40 Gew.-%, mindestens eines feinteiligen Füllstoffes. Die Menge an amphoteren wasserlöslichen Polymer beträgt beispielsweise 0,1 bis 5 Gew.-%, vorzugsweise 0,25 - 3 Gew.-%, bezogen auf Füllstoffe.

Gegenstand der Erfindung ist außerdem ein Verfahren zur Herstellung der wäßrigen Anschlämmungen, wobei man zu einer wäßrigen Anschlämmung mindestens eines feinteiligen Füllstoffes 0,1 bis 5 Gew.-%, bezogen auf Füllstoff, mindestens eines Copolymeren zusetzt, das erhältlich ist durch Copolymerisieren von

(a) mindestens einem N-Vinylcarbonsäureamid der Formel

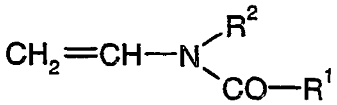 (III),

in der $R^1$, $R^2$ = H oder $C_1$- bis $C_6$-Alkyl bedeuten,

(b) mindestens einer monoethylenisch ungesättigten Carbonsäure mit 3 bis 8 C-Atomen im Molekül und/oder deren Alkalimetall-, Erdalkalimetall- oder Ammoniumsalzen und gegebenenfalls

(c) anderen monoethylenisch ungesättigten Monomeren, die frei von Nitrilgruppen sind, und gegebenenfalls

(d) Verbindungen, die mindestens zwei ethylenisch ungesättigte Doppelbindungen im Molekül aufweisen,

und anschließende teilweise oder vollständige Abspaltung der Gruppen -CO-$R^1$ aus den in das Copolymerisat einpolymerisierten Monomeren III oder die wässrige Anschlämmung mindestens eines feinteiligen Füllstoffs in eine wässrige Lösung des genannten amphoteren Copolymeren einträgt und die Bestandteile jeweils mischt.

Die Molmasse der wasserlöslichen amphoteren Polymere beträgt beispielsweise mindestens 10.000, vorzugsweise mindestens 100.000 Dalton und insbesondere mindestens 500.000 Dalton.

Ein weiterer Gegenstand der Erfindung ist die Verwendung der oben beschriebenen wäßrigen Anschlämmungen als Zusatz zum Papierstoff bei der Herstellung von füllstoffhaltigem Papier, füllstoffhaltigem Karton oder füllstoffhaltigern Pappe durch Entwässern des Papierstoffs.

Als Füllstoffe kommen alle üblicherweise in der Papierindustrie einsetzbaren Pigmente in Betracht, z.B. Calciumcarbonat, das in Form von gemahlenen (GCC) Kalk, Kreide, Marmor oder präzipitiertem Calciumcarbonat (PCC) eingesetzt werden kann, Talkum, Kaolin, Bentonit, Satinweiß, Calciumsulfat, Bariumsulfat und Titandioxid. Man kann auch Mischungen aus zwei oder mehreren Pigmenten einsetzen. Der Teilchendurchmesser der feinteiligen Füllstoffe liegt beispielsweise zwischen 40 und 90% kleiner 2$\mu$m.

Die Füllstoffe werden beispielsweise durch Einbringen in Wasser zu einer wässrigen Anschlämmung verarbeitet. Präzipitiertes Calciumcarbonat wird üblicherweise in Abwesenheit von Dispergiermitteln in Wasser aufgeschlämmt. Um wässrige Anschlämmungen der übrigen Füllstoffe herzustellen, verwendet man in der Regel ein anionisches Dispergiermittel, z.B. Polyacrylsäuren mit einer mittleren Molmasse Mw von beispielsweise 1000 bis 40.000 Dalton. Falls man ein anionisches Dispergiermittel verwendet, so setzt man davon beispielsweise 0,01 bis 0,5 Gew.-% vorzugsweise 0,2 bis 0,3 Gew.-% zur Herstellung wässriger Füllstoffanschlämmungen ein. Die in Gegenwart von anionischen Dispergiermitteln in Wasser dispergierten feinteiligen Füllstoffe sind anionisch. Die wässrigen Anschlämmungen enthalten beispielsweise 10 bis 30 Gew-%, meistens 15 - 25 Gew.-% mindestens eines Füllstoffs.

Um die erfindungsgemäßen wässrigen Anschlämmungen von feinteiligen Füllstoffen herzustellen, behandelt man wässrige Anschlämmungen von gegebenenfalls anionisch dispergierten feiteiligen Füllstoffen mit mindestens einem wasserlöslichen amphoteren Polymer. Beispielsweise kann man bis zu einer 1 bis 50 Gew.-% mindestens eines feinteiligen Füllstoffs enthaltenden wässrigen Anschlämmung 0,1 bis 5 Gew.-% bezogen auf Füllstoffe, eines wasserlöslichen amphoteren Polymers zusetzen oder eine wässrige Anschlämmung eines feinteiligen Füllstoffs in eine wässrige Lösung eines amphoteren Polymers eintragen und die Komponenten jeweils mischen. Das Behandeln der wässrigen Anschlämmung von feinteiligen Füllstoffen mit den amphoteren Polymeren kann kontinuierlich oder diskontinuierlich durchgeführt werden. Beim Zusammenbringen von wässrigen Anschlämmungen feinteiliger Füllstoffe und wässrigen Lösungen amphoterer Polymere werden die Füllstoffteilchen zumindest teilweise mit den amphoteren Polymeren überzogen bzw. imprägniert. Das Mischen der Komponenten erfolgt beispielsweise in einem Scherfeld. Meistens ist es ausreichend, wenn man die Komponenten nach dem Zusammenbringen rührt oder sie in einem Scherfeld eines Ultraturraxgerätes behandelt. Das Zusammenbringen und Mischen der Bestandteile der wässrigen Anschlämmungen kann beispielsweise in dem Temperaturbereich von 0°c bis 95°C, vorzugsweise 10 bis 70°C erfolgen. Meistens mischt man die Komponenten bei der jeweiligen Raumtemperatur bis zu einer Temperatur von 40°C. der pH-Wert der mit amphoteren Polymeren behandelten wässrigen Anschlämmungen von Füllstoffen beträgt beispielsweise 5 bis 11, vorzugsweise 6 bis 9, wobei der pH-Wert von Calciumcarbonat enthaltenden Anschlämmungen vorzugsweise mehr als 6,5 beträgt.

Die wasserlöslichen amphoteren Copolymere sind aus der zum Stand der Technik genannten EP-B-0 672 212 bekannt. Sie werden durch Copolymerisieren von

(a) mindestens einem N-Vinylcarbonsäureamid der Formel

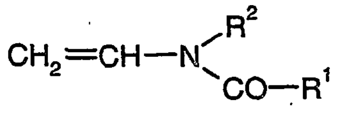

(III),

in der $R^1$, $R^2$ = H oder $C_1$- bis $C_6$-Alkyl bedeuten,

(b) mindestens einer monoethylenisch ungesättigten Carbonsäure mit 3 bis 8 C-Atomen im Molekül und/oder deren Alkalimetall-, Erdalkalimetall- oder Ammoniumsalzen und gegebenenfalls

(c) anderen monoethylenisch ungesättigten Monomeren, die frei von Nitrilgruppen sind, und gegebenenfalls

(d) Verbindungen, die mindestens zwei ethylenisch ungesättigte Doppelbindungen im Molekül aufweisen,

und anschließende teilweise oder vollständige Abspaltung der Gruppen -CO-$R^1$ aus den in das Copolymerisat einpolymerisierten Monomeren III hergestellt. Bevorzugt sind wässrigen Anschlämmungen feinteiliger Füllstoffe, die mit amphoteren Copolymerisaten behandelt sind, die erhältlich sind durch Copolymerisieren von

(a) N-Vinylformamid,

(b) Acrylsäure, Methacrylsäure und/oder deren Alkali- oder Ammoniumsalzen und gegebenenfalls

(c) anderen monoethylenisch ungesättigten Monomeren, die frei von Nitrilgruppen sind,

und anschließende teilweise oder vollständige Hydrolyse der in den Copolymerisaten enthaltenen Vinylformamideinheiten in Gegenwart von Säuren, z.B. Salzsäure oder von Basen wie Natronlauge oder Kalilauge. Bei der Hydrolyse der Vinylformamideinheiten mit Säuren oder Basen entstehen Vinylamin- und/oder Amidineinheiten der Formel

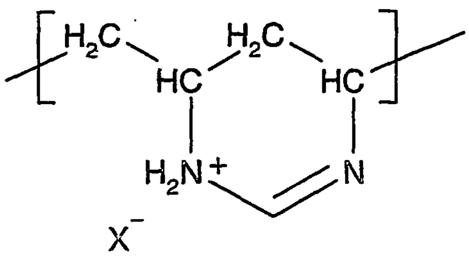

(II),

in der X- ein Anion bedeutet. Das ursprünglich anionische Copolymerisat erhält dadurch kationische Gruppen und wird somit amphoter. Die Hydrolyse der einpolymerisierten Monomereinheiten III kann auch enzymatisch erfolgen. Die Amidineinheiten entstehen durch Reaktion benachbarter Vinylamineinheiten mit Vinylformamideinheiten. Im Folgenden wird für die amphoteren Copolymerisate immer die Summe von Vinylamin - und Amidineinheiten angegeben, die aus den einpolymerisierten Einheiten der N-Vinylcarbonsäureamide entstehen.

Beispiele für Monomere der Gruppe (a) sind N-Vinylformamid, N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid. Die Monomeren der Gruppe (a) können allein oder in Mischung bei der Copolymerisation mit den Monomeren der anderen Gruppen eingesetzt werden.

Als Monomere der Gruppe (b) kommen monoethylenisch ungesättigte Carbonsäuren mit 3 bis 8 C-Atomen sowie die wasserlöslichen Salze dieser Carbonsäuren in Betracht. Zu dieser Gruppe von Monomeren gehören beispielsweise Acrylsäure, Methacrylsäure, Dimethacrylsäure, Ethacrylsäure, Maleinsäure, Fumarsäure, Itoconsäure, Mesaconsäure, Citraconsäure, Methylenmalonsäure, Allylessigsäure, Vinylessigsäure und Crotonsäure. Die Monomeren dieser Gruppe können allein oder in Mischung miteinander, in teilweise oder in vollständig neutralisierter Form bei der Copolymerisation eingesetzt werden. Zur Neutralisation verwendet man beispielsweise Alkalimetall- oder Erdalkalimetallbasen, Ammoniak, Amine und/oder Alkanolamine. Beispiele hierfür sind Natronlauge, Kalilauge, Soda, Pottasche, Natriumhydrogencarbonat, Magnesiumoxid, Calciumhydroxid, Calciumoxid, Triethanolamin, Ethanolamin, Morpholin, Diethylentriamin oder Tetraethylenpentamin.

Die Copolymerisate können zur Modifizierung gegebenenfalls Monomere der Gruppe (c) in einpolymerisierter

Form enthalten, die frei von Nitrilgruppen sind, z.B. Methylacrylat, Ethylacrylat, n-Butylacrylat, Isobutylacrylat, Isobutylmethacrylat, Methylmethacrylat, Ethylmethacrylat, Vinylacetat, Vinylpropionat, N-Vinylpyrrolidon, N-Vinylimidazol, Acrylamid und/oder Methacrylamid.

Eine weitere Modifizierung der Copolymerisate ist dadurch möglich, dass man bei der Copolymerisation Monomere (d) einsetzt, die mindestens zwei Doppelbindungen im Molekül enthalten, z.B. Methlenbisacrylamid, Glykoldiacrylat, Glykoldimethacrylat, Gylcerintriacrylat, Pentaerythrittriallylether, mindestens zweifach mit Acrylsäure und/oder Methacrylsäure veresterte Polyalkylenglykole oder Polyole wie Pentaerythrit, Sobit oder Glukose. Falls mindestens ein Monomer der Gruppe (d) bei der Copolymerisation eingesetzt wird, so betragen die angewendeten Mengen bis zu 2 Mol-%, z.B. 0,001 bis 1 Mol-%.

Die Copolymerisation der Monomeren erfolgt in bekannten Weise, vgl. EP-B-0 672 212, Seite 4, Zeilen 13 - 37. Die Hydrolyse der Copolymeren ist in der genannten EP-Patentschrift auf Seite 4, Zeilen 38 - 58 und auf Seite 5, Zeilen 1 - 25 beschrieben. Bevorzugt werden hydrolysierte Copolymerisate eingesetzt, bei der die Hydrolyse in Gegenwart von Säuren durchgeführt wurde. Der Hydrolysegrad der einpolymerisierten Vinylcarbonsäureamidgruppen beträgt beispielsweise 1 bis 98, meistens 10 bis 98 %, vorzugsweise 20 bis 60 Mol%.

Die hydrolysierten Copolymerisate enthalten beispielsweise

(i) 1 bis 98 Mol-%, vorzugsweise 1 bis 75 Mol-% Vinylcarbonsäureamideinheiten,
(ii) 1 bis 98 Mol-%, vorzugsweise 1 bis 55 Mol-% Einheiten mindestens einer monoethylenisch ungesättigten Carbonsäure mit 3 bis 8 C-Atomen und
(iii) 1 bis 98 Mol%, vorzugsweise 1 bis 55 Mol-% Vinylamin- und/oder Amidineinheiten der Formel

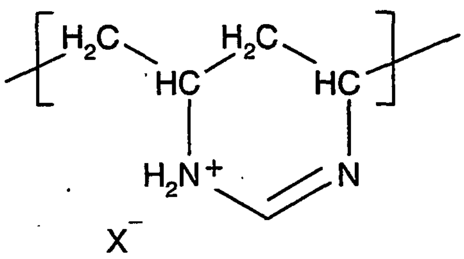

(II),

in der $X^-$ ein Anion bedeutet, und gegebenenfalls
(iv) bis zu 30 Mol-% Einheiten von anderen monoethylenisch ungesättigten Verbindungen, die frei von Nitrilgruppen sind.

Besonders bevorzugt sind solche hydrolysierten Copolymerisate, die

(i) 5 bis 70 Mol-% Vinylformamideinheiten,
(ii) 15 bis 45 Mol-% Acrylsäure- und/oder Methacrylsäureeinheiten und
(iii) 10 bis 50 Mol-% Vinylamineinheiten in Salzform und Amidineinheiten der Formel II

enthalten.

Die amphoteren Copolymerisate können eine anionische oder eine kationische Überschußladung tragen oder auch elektrisch neutral sein, wenn gleich viele anionische und kationische Gruppen im Copolymerisat vorliegen. In Abhängigkeit vom Ladungszustand der amphoteren Copolymerisate sind die damit hergestellten wässrigen Anschlämmungen der Füllstoffe anionisch, kationisch oder elektrisch neutral wenn die amphoteren Copolymerisate die gleiche Menge an kationischer and anionischer Ladung aufweisen.

Vorzugsweise werden solche amphoteren Copolymerisate eingesetzt, die bei pH 7 sowohl im anionischen als auch im kationischen Bereich eine Ladungsdichte von vorzugsweise höchstens 1 meq/g haben.

Die Prozentangaben in den Beispielen bedeuten Gewichtsprozent, sofern aus dem Zusammenhang nichts anderes hervorgeht. Die elektrophoretische Mobilität bzw. das Zetapotential wurden laseroptisch bestimmt. Für Elektrophoresemessungen wurden die Proben mit einer wässrigen KCl-Lösung (z.B. 10 mMol) auf eine Konzentration für die Messung von 1 Vol.-% verdünnt. Als Messinstrument diente der Zetasizer 3000 HS der Firma Malvern Instruments Ltd..

Die Molmassen Mw der Polymer wurden mit Hilfe von statischer Lichtstreuung bestimmt. Die Messungen wurden bei pH 7,6 in einer 10 mmolaren wässrigen Kochsalzlösung durchgeführt.

Die Zusammensetzung der Polymere wurde mit Hilfe der $^{13}$C-NMr-Spektroskopie ermittelt. Dazu wurden die Signale der folgenden C-Atome integriert. Als Lösemittel wurde $D_2O$ verwendet.

| Gruppe | Lage des Signals [ppm] | Fläche |
|---|---|---|
| -COONa | 185 | F (Acrylat) |
| $HCOO^-$ | 172 | F (Formiat) |
| -NHCOH | 164-174[1)] | F (Formamid) |
| -N=CH-N- | 152 | F (Amidine) |
| [1)] mehrere Signale | | |

Die Anteile der einzelnen Monomereinheiten in Mol % ergibt sich nach folgenden Formeln:

**Acrylsäure:** 100*F(Acrylat) / [ F(Acrylat)+ F (Formiat)+ F (Formamid)+ F (Amidine)]

**Vinylamin:** 100*F(Formiat) / [ F(Acrylat)+ F (Formiat)+ F (Formamid)+ F (Amidine)]

**Vinylformamid:** 100*F(Formamid) / [ F(Acrylat)+ F (Formiat)+ F (Formamid)+ F (Amidine)]

**Amidine:** 100*F(Amidine) / [ F(Acrylat)+ F (Formiat)+ F (Formamid)+ F (Amidine)]

Als Füllstoffe wurden gefällte Kreide, präzipitiertes Calciumcarbonat (PCC), gemahlene Kreide (GCC), Kaolin oder Mischungen aus den genannten Füllstoffen eingesetzt.

Beispiel 1

6 g einer 12%igen wässrigen Lösung eines amphoteren Copolymeren mit einem Gehalt an 40 Mol-% Vinylformamideinheiten, 30 Mol-% Acrylsäureeinheiten und 30 Mol-% Vinylamin- und Amidineinheiten und einem Molekulargewicht Mw von ca. 500.000 wurden in einem Becherglas vorgelegt und anschließend mit 30g Wasser verdünnt. Anschließend gab man 150g einer 20%igen Aufschlämmung von präzipitiertem Calciumcarbonat (PCC) in Wasser zu. Während der Zugabe der PCC-Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nahm bei beiden pH-Einstellungen einen leicht negativen Wert an.

Beispiel 2

6 g einer 12%igen wässrigen Lösung eines amphoteren Copolymeren mit einem Gehalt an 5 Mol-% Vinylformamideinheiten, 45 Mol-% Acrylsäureeinheiten und 50 Mol-% Vinylamin- und Amidineinheiten und einem Molekulargewicht Mw von ca. 400.000 wurden in einem Becherglas vorgelegt und anschließend mit 30g Wasser verdünnt. Anschließend gab man 150g einer 20%igen Aufschlämmung von präzipitiertem Calciumcarbonat (PCC) in Wasser zu. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt. Mit Hilfe der Mikroelektrophorese wurde die Mobilität der Füllstoffteilchen bei pH 8,5 und bei pH 7 gemessen. Die elektrophoretische Mobilität nahm bei beiden pH-Einstellungen einen leicht negativen Wert an.

Beispiel 3

6 g einer 12%igen wässrigen Lösung eines amphoteren Copolymeren mit einem Gehalt an 70 Mol-% Vinylformamideinheiten, 20 Mol-% Acrylsäureeinheiten und 10 Mol-% Vinylamin- und Amidineinheiten und einem Molekulargewicht Mw von ca. 700.000 wurden in einem Becherglas vorgelegt und anschließend mit 30g Wasser verdünnt. Anschließend gab man 150g einer 20%igen Aufschlämmung von präzipitiertem Calciumcarbonat (PCC) in Wasser zu. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt. Mit Hilfe der Mikroelektrophorese wurde die Mobilität der Füllstoffteilchen bei pH 8,5 und bei pH 7 gemessen. Die elektrophoretische Mobilität nahm bei beiden pH-Einstellungen einen leicht negativen Wert an.

Beispiel 4

6 g einer 12%igen wässrigen Lösung eines amphoteren Copolymeren mit einem Gehalt an 30 Mol-% Vinylformamideinheiten, 40 Mol-% Acrylsäureeinheiten und 30 Mol-% Vinylamin- und Amidineinheiten und einem Molekulargewicht Mw von ca. 400.000 wurden in einem Becherglas vorgelegt und anschließend mit 30g Wasser verdünnt. Anschließend gab man 150g einer 20%igen Aufschlämmung von präzipitiertem Calciumcarbonat (PCC) in Wasser zu. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt. Mit Hilfe der Mikroelektrophorese wurde die Mobilität der Füllstoffteilchen bei pH 8,5 und bei pH 7 gemessen. Die elektrophoretische Mobilität nahm bei beiden pH-Einstellungen einen leicht negativen Wert an.

Beispiel 5

6 g einer 12%igen wässrigen Lösung eines amphoteren Copolymeren mit einem Gehalt and 30 Mol-% Vinylformamideinheiten, 30 Mol-% Acrylsäureeinheiten und 40 Mol-% Vinylamin- und Amidineinheiten und einem Molekulargewicht Mw von ca. 400.000 wurden in einem Becherglas vorgelegt und anschließend mit 30g Wasser verdünnt. Anschließend gab man 150g einer 20%igen Aufschlämmung von präzipitiertem Calciumcarbonat (PCC) in Wasser zu. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt. Mit Hilfe der Mikroelektrophorese wurde die Mobilität der Füllstoffteilchen bei pH 8,5 und bei pH 7 gemessen. Die elektrophoretische Mobilität nahm bei beiden pH-Einstellungen einen leicht negativen Wert an.

Beispiel 6

6 g einer 12%igen wässrigen Lösung eines amphoteren Copolymeren mit einem Gehalt an 40 Mol-% Vinylformamideinheiten, 30 Mol-% Acrylsäureeinheiten und 30 Mol-% Vinylamin- und Amidineinheiten und einem Molekulargewicht Mw von ca. 500.000 wurden in einem Becherglas vorgelegt und anschließend mit 30g Wasser verdünnt. Anschließend gab man 150g einer 20%igen Aufschlämmung von gemahlenem Calciumcarbinat (GCC) in Wasser zu. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt. Mit Hilfe der Mikroelektrophorese wurde die Mobilität der Füllstoffteilchen bei pH 8,5 und bei pH 7 gemessen. Die elektrophoretische Mobilität nahm bei beiden pH-Einstellungen einen leicht negativen Wert an.

Beispiel 7

6 g einer 12%igen wässrigen Lösung eines amphoteren Copolymeren mit einem Gehalt an 40 Mol-% Vinylformamideinheiten, 30 Mol-% Acrylsäureeinheiten und 30 Mol-% Vinylamin- und Amidineinheiten und einem Molekulargewicht Mw von ca. 500.000 wurden in einem Becherglas vorgelegt und anschließend mit 30g Wasser verdünnt. Anschließend gab man 150g einer 20%igen Aufschlämmung von Kaolin-Clay-Mischung in Wasser zu. Während der Zugabe dieser Slurry und danach wurde die Mischung mit Hilfe eines Heiltof-Rührers bei 1000 UpM gerührt. Der pH-Wert der Mischung wurde anschließend auf 8,5 eingestellt. Mit Hilfe der Mikroelektrophorese wurde die Mobilität der Füllstoffteilchen bei pH 8,5 und bei pH 7 gemessen. Die elektrophoretische Mobilität nahm bei beiden pH-Einstellungen einen leicht negativen Wert an.

Vergleichsbeispiel 1 nach Beispiel 1 der JP-A-08059740

6 g einer 12%igen wässrigen Lösung eines amphoteren Copolymeren mit einem Gehalt an 35 Mol-% Amidineinheiten der Struktur I, 20 Mol-% Vinylformamideinheiten, 10 Mol-% Vinylamineinheiten, 5 Mol-% Acrylsäureeinheiten und 30 Mol-% Nitrileinheiten und einer Molmasse Mw von 300.000 Dalton wurden in einem Becherglas vorgelegt und anschließend mit 30g Wasser verdünnt. Die Grenzviskosität der Polymeren betrug 2,7 dl/g (gemessen mit einem Oswald-Viskosimeter in einer wässrigen NaCl-Lösung bei einem NaCl-Gehalt von 0,1 g/dl und einer Temperatur von 25°C.

Anschließend gab man 150g einer 20%igen Aufschlämmung von präzipitiertem Calciumcarbonat (PCC) in Wasser zu. Während der Zugabe der Slurry und danach wurde die Mischung mit Hilfe eines Heiltof-Rührers bei 1000 UpM gerührt. Der pH-Wert der Mischung wurde anschließend auf 8,5 eingestellt. Die mit Hilfe der Mikroelektrophorese wurde die Mobilität der Füllstoffteilchen bei pH 8,5 und bei pH 7 gemessen. Die elektrophoretische Mobilität nahm bei beiden pH-Einstellungen einen leicht negativen Wert an.

Herstellung von füllstoffhaltigem Papier

Papier Typ A

Beispiele 8 - 14

Eine Mischung aus TMP (Thermo-mechanical pulp) und Holzschliff wurde im Verhältnis von 70/30 bei einer Feststoffkonzentration von 4% im Laborpulper stippenfrei aufgeschlagen, bis ein Mahlgrad von 60 -65 erreicht wurde. Der pH-Wert des Stoffs lag dabei im Bereich zwischen 7 und 8. Der gemahlene Stoff wurde anschließend durch Zugabe von Wasser auf eine Feststoffkonzentration von 0,35% verdünnt.

Um das Verhalten der oben beschriebenen wässrigen Füllstoff-Slurries bei der Herstellung von füllstoffhaltigem Papier zu ermitteln, legte man jeweils 500ml der Papierstoffsuspension vor und dosierte jeweils in diese Pulpe die gemäß den Beispielen und dem Vergleichsbeispiel behandelten Slurries sowie ein kationisches Polyacrylamid als Retentionsmittel (Polymin KE 2020). Die Dosiermenge des Retentionsmittels betrug jeweils 0,01 % Polymer, bezogen auf Trokkengehalt der Papierstoffsuspension. Die Menge an Slurry wurde mit Hilfe mehrerer Vorversuche so eingestellt, dass der Aschegehalt der mit dem Stoff gefertigten Papierblätter 32% betrug. Außerdem wurden Blätter unter Verwendung der in Tabelle 1 angegebenen 20%igen wässrigen Anschlämmungen von pärzipitiertem Calciumcarbonat (PCC-Slurry), gemahlenem Calciumcarbonat (GCC-Slurry) sowie Kaolin Clay hergestellt.

Die Papierblätter wurden jeweils auf einem Rapid-Köthen-Blattbildner nach ISO 5269/2 mit einem Blattgewicht von 80g/m2 gefertigt und anschließend 7 Minuten bei 90°C getrocknet und danach mit einem Liniendruck von 200 N/cm kalandriert.

Prüfung der Papierblätter vom Typ A

Nach einer Lagerzeit im Klimaraum bei konstant 23°C und 50% Luftfeuchtigkeit für 12 Stunden wurden die Trockenreißlänge der Blätter nach DIN 54540 und die Porosität der Blätter nach Bendtsen (ISO 5636-3) geprüft. Die Trockenruffestigkeit der wurde mit dem IGT- Bedruckbarkeitsprüfer (SO 3783) ermittelt. Die Ergebnisse sind in Tabelle 1 angegeben.

Papier Typ B

Beispiele 15 - 20

Eine Mischung aus gebleichtem Birkensulfat und gebleichtem Kiefemsulfit wurde im Verhältnis von 70/30 bei einer Feststoffkonzentration von 4% im Laborpulper stippenfrei aufgeschlagen, bis ein Mahlgrad von 55 -60 erreicht wurde. Dem aufgeschlagenen Stoff wurde anschließend ein optischer Aufheller (Blankophor® PSG) sowie eine kationische Stärke (HiCat 5163 A) zugegeben. Der Aufschuß der kationischen Stärke erfolgte als 10%ige Stärkeslurry in einem Jet-Kocher bei 130°C und 1 Minute Verweilzeit. Die Dosiermenge des optischen Aufhellers betrug 0,5% Handelsware, bezogen auf den Trockengehalt der Papierstoffsuspension. Die Dosiermenge der kationischen Stärke betrug 0,5% Stärke, bezogen auf den Trockengehalt der Papierstoffsuspension. Der pH-Wert des Stoffs lag dabei im Bereich zwischen 7 und 8. Der gemahlene Stoff wurde anschließend durch Zugabe von Wasser auf eine Feststoffkonzentration von 0,35% verdünnt.

Um das Verhalten der oben beschriebenen wässrigen Füllstoff-Slurries bei der Herstellung von füllstoffhaltigem Papier zu ermitteln, legte man jeweils 500ml der Papierstoffsuspension vor und dosierte jeweils in diese Pulpe die gemäß den Beispielen und dem Vergleichsbeispiel behandelten Slurries sowie ein kationisches Polyacrylamid als Retentionsmittel (Polymin KE 2020). Die Dosiermenge des Retentionsmittels betrug jeweils 0,01 % Polymer, bezogen auf Trok-

kengehalt der Papierstoffsuspension. Die Menge an Slurry wurde mit Hilfe mehrerer Vorversuche so eingestellt, dass der Aschegehalt der mit dem Stoff gefertigten Papierblätter 20% betrug. Außerdem wurden Blätter unter Verwendung der in Tabelle 2 angegebenen 20%-tigen wässrigen Anschlämmungen von präzipitiertem Calciumcarbonat (PCC-Slurry) und gemahlenem Calciumcarbonat (GCC-Slurry) hergestellt.

Die Papierblätter wurden jeweils auf einem Rapid-Köthen-Blattbildner nach ISO 5269/2 mit einem Blattgewicht von 80g/m2 gefertigt und anschließend 7 Minuten bei 90°C getrocknet.

Prüfung der Papierblätter vom Typ B

Nach einer Lagerzeit im Klimaraum bei konstant 23°C und 50% Luftfeuchtigkeit für 12 Stunden wurden die Trockenreißlänge der Blätter nach DIN 54540, die innere Festigkeit nach DIN 54516 ermittelt. Der sogenannte Weißegrad CIE wurde mit einem Spektralphotometer vom Typ Elrepho SF 400 nach DIN 5033 bestimmt. Die Ergebnisse sind in Tabelle 2 angegeben.

Tabelle 1

| Beispiel | Slurry nach Beisp. | Trockenreißlänge (m) | Porosität (ml/min) | IGT |
|---|---|---|---|---|
| 8 | 1 | 2213 | 1675 | Sehr gut |
| 9 | 2 | 2086 | 1789 | Sehr gut |
| 10 | 3 | 2016 | 1811 | Sehr gut |
| 11 | 4 | 1987 | 1698 | Gut |
| 12 | 5 | 2123 | 1678 | Sehr gut |
| 13 6 | 6 | 2097 | 1756 | Sehr gut |
| 14 | 7 | 2145 | 1541 | Sehr gut |
| Vergleichsbeispiele | | | | |
| PCC-Slurry ohne Vorbehandlung | | 1356 | 1734 | Schlecht |
| GCC-Slurry ohne Vorbehandlung | | 1247 | 1876 | Schlecht |
| Kaolin-Clay-Slurry ohne Vorbehandlung | | 1415 | 1476 | Schlecht |
| | | | | |
| | | | | |
| | | | | |
| Slurry nach Ver- | | | | |
| gleichsbeispiel 1 | | 1745 | 1701 | Mittel |

Tabelle 2

| Beisp | Slurry nach Beisp. | Trockenreißlänge (m) | CIE-Weisse | Innere Festigkeit [N] |
|---|---|---|---|---|
| 15 | 1 | 4176 | 114,6 | 23,4 |
| 16 | 2 | 4098 | 112,5 | 22,8 |
| 17 | 3 | 3987 | 113,5 | 22,6 |
| 18 | 4 | 4123 | 111,4 | 23,7 |
| 19 | 5 | 4076 | 113,6 | 23,2 |
| 20 | 6 | 3951 | 118,8 | 22,1 |
| Vergleichsbeispiele | | | | |
| PCC-Slurry ohne Vorbehandlung | | 3285 | 110,7 | 15,6 |
| GCC-Slurry ohne Vorbehandlung | | 3020 | 119,4 | 15,2 |

(fortgesetzt)

| Beisp Slurry nach Beisp. | Trockenreißlänge (m) | CIE-Weisse | Innere Festigkeit [N] |
|---|---|---|---|
| | | | |
| | | | |
| | | | |
| Slurry nach Ver- | | | |
| gleichsbeispiel 1 | 3675 | 111,2 | 17,8 |

## Patentansprüche

1. Wässrige Anschlämmungen von feinteiligen Füllstoffen, die zumindest teilweise mit Polymerisaten überzogen sind, **dadurch gekennzeichnet, daß** sie erhältlich sind durch Behandeln von wässrigen Anschlämmungen feinteiliger Füllstoffe mit mindestens einem wasserlöslichen amphoteren Copolymerisat, das erhältlich ist durch Copolymerisieren von

   (a) mindestens einem N-Vinylcarbonsäureamid der Formel

   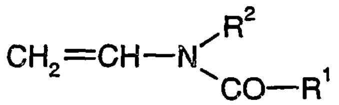

   (III),

   in der $R^1$, $R^2$ = H oder $C_1$- bis $C_6$-Alkyl bedeuten,
   (b) mindestens einer monoethylenisch ungesättigten Carbonsäure mit 3 bis 8 C-Atomen im Molekül und/oder deren Alkalimetall-, Erdalkalimetall- oder Ammoniumsalzen und gegebenenfalls
   (c) anderen monoethylenisch ungesättigten Monomeren, die frei von Nitrilgruppen sind, und gegebenenfalls
   (d) Verbindungen, die mindestens zwei ethylenisch ungesättigte Doppelbindungen im Molekül aufweisen,

   und anschließende teilweise oder vollständige Abspaltung der Gruppen -CO-$R^1$ aus den in das Copolymerisat einpolymerisierten Monomeren III.

2. Wässrige Anschlämmungen nach Anspruch 1, **dadurch gekennzeichnet, dass** man wässrige Anschlämmungen feinteiliger Füllstoffe mit einem amphoteren Copolymerisat behandelt, das erhältlich ist durch Copolymerisieren von

   (a) N-Vinylformamid,
   (b) Acrylsäure, Methacrylsäure und/oder deren Alkali- oder Ammoniumsalzen und gegebenenfalls
   (c) anderen monoethylenisch ungesättigten Monomeren

   und anschließende teilweise oder vollständige Hydrolyse der in den Copolymerisaten enthaltenen Vinylformamideinheiten in Gegenwart von Säuren oder Basen.

3. Wässrige Anschlämmungen nach Anspruch 1 oder 2, **dadurch gekennzeichnet, daß** sie 1 bis 50 Gew. -% mindestens eines feinteiligen Füllstoffes enthalten und daß die Menge des amphoteren Copolymerisates 0,05 bis 5 Gew.-%, bezogen auf Füllstoff beträgt.

4. Wässrige Anschlämmungen nach einem der Ansprüche 1 bis 3, **dadurch gekennzeichnet, daß** sie 10 bis 40 Gew.-% mindestens eines Füllstoffes enthalten.

5. Wässrige Anschlämmungen nach einem der Ansprüche 1 bis 4, **dadurch gekennzeichnet, daß** die amphoteren Copolymerisate eine Molmasse Mw von mindestens 10.000 aufweisen.

6. Wässrige Anschlämmungen nach einem der Ansprüche 1 bis 5, **dadurch gekennzeichnet, dass** der Hydrolysegrad der einpolymerisierten Vinylcarbonsäureamidgruppen 10 bis 98% beträgt.

7. Wässrige Anschlämmungen nach einem der Ansprüche 1 bis 6, **dadurch gekennzeichnet, dass** die hydrolysierten Copolymerisate

(I) 1 bis 98 Mol-%, vorzugsweise 1 bis 75 Mol-% Vinylcarbonsäureamideinheiten,
(II) 1 bis 98 Mol-%, vorzugsweise 1 bis 55 Mol-% Einheiten mindestens einer monoethylenisch ungesättigten Carbonsäure mit 3 bis 8 C-Atomen und
(III) 1 bis 98 Mol-%, vorzugsweise 1 bis 55 Mol-% Vinylamin- und/oder Amidineinheiten der Formel

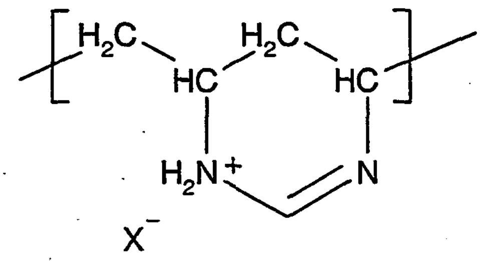

in der $X^-$ ein Anion bedeutet, und gegebenenfalls
(iv) bis zu 30 Mol-% Einheiten von anderen monoethylenisch ungesättigten Verbindungen enthalten, die frei von Nitrilgruppen sind.

8. Wässrige Anschlämmungen nach einem der Ansprüche 1 bis 7, **dadurch gekennzeichnet, dass** die amphoteren Copolymerisate

(I) 5 bis 70 Mol-% Vinylformamideinheiten,
(II) 15 bis 45 Mol-% Acrylsäure- und/oder Methacrylsäureeinheiten und
(III) 10 bis 50 Mol-% Vinylamineinheiten in Salzform und Amidineinheiten der Formel

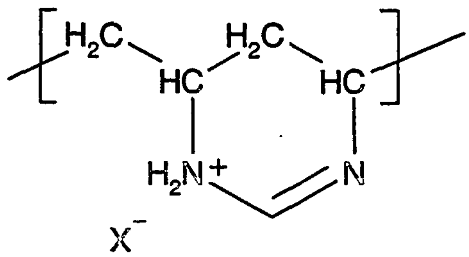

enthalten.

9. Wässrige Anschlämmungen nach einem der Ansprüche 1 bis 8, **dadurch gekennzeichnet, dass** die amphoteren Copolymerisate eine anionische Überschußladung tragen.

10. Wässrige Anschlämmungen nach einem der Ansprüche 1 bis 8, **dadurch gekennzeichnet, dass** die amphoteren Copolymerisate eine kationische Überschußladung tragen.

11. Wässrige Anschlämmungen nach einem der Ansprüche 1 bis 8, **dadurch gekennzeichnet, daß** die amphoteren Copolymerisate die gleiche Menge an kationischer and anionischer Ladung aufweisen.

12. Verfahren zur Herstellung der wässrigen Anschlämmung nach den Ansprüchen 1 bis 11, **dadurch gekennzeichnet, daß** man zu einer wässrigen Anschlämmung mindestens eines feinteiligen Füllstoffes 0,1 bis 5 Gew.-%, bezogen auf Füllstoff, mindestens eines Copolymeren zusetzt, das erhältlich ist durch Copolymerisieren von

(a) mindestens einem N-Vinylcarbonsäureamid der Formel

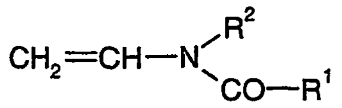 (III),

in der $R^1$, $R^2$ = H oder $C_1$- bis $C_6$-Alkyl bedeuten,
(b) mindestens einer monoethylenisch ungesättigten Carbonsäure mit 3 bis 8 C-Atomen im Molekül und/oder deren Alkalimetall-, Erdalkalimetall- oder Ammoniumsalzen und gegebenenfalls
(c) anderen monoethylenisch ungesättigten Monomeren, die frei von Nitrilgruppen sind, und gegebenenfalls
(d) Verbindungen, die mindestens zwei ethylenisch ungesättigte Doppelbindungen im Molekül aufweisen,

und anschließende teilweise oder vollständige Abspaltung der Gruppen -CO-$R^1$ aus den in das Copolymerisat einpolymerisierten Monomeren III oder die wässrige Anschlämmung mindestens eines feinteiligen Füllstoffs in eine wässrige Lösung des genannten amphoteren Copolymeren einträgt und die Bestandteile jeweils mischt.

**13.** Verfahren nach Anspruch 12, **dadurch gekennzeichnet dass** die elektrophoretische Mobilität der feinteiligen Füllstoffteilchen der wässrigen Anschlämmung bei einem pH von 7 negativ ist oder maximal null beträgt.

**14.** Verwendung der wässrigen Anschlämmung nach den Ansprüchen 1 bis 11, als Zusatz zum Papierstoff bei der Herstellung von füllstoffhaltigem Papier, füllstoffhaltigem Karton oder füllstoffhaltiger Pappe durch Entwässern des Papierstoffs.

## Claims

**1.** An aqueous slurry of finely divided fillers which are at least partly coated with polymers, wherein said slurry is obtainable by treating an aqueous slurry of finely divided fillers with at least one water-soluble amphoteric copolymer which is obtainable by copolymerization of

(a) at least one N-vinylcarboxamide of the formula

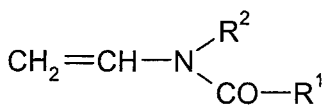 (III),

where $R^1$ and $R^2$ are H or $C_1$- to $C_6$-alkyl,
(b) at least one monoethylenically unsaturated carboxylic acid having 3 to 8 carbon atoms in the molecule and/or the alkali metal, alkaline earth metal or ammonium salts thereof and, if appropriate,
(c) other monoethylenically unsaturated monomers which are free of nitrile groups and, if appropriate,
(d) compounds which have at least two ethylenically unsaturated double bonds in the molecule,

and subsequent partial or complete elimination of the groups -CO-$R^1$ from the monomers III incorporated in the form of polymerized units in the copolymer.

**2.** The aqueous slurry according to claim 1, wherein an aqueous slurry of finely divided fillers is treated with an amphoteric copolymer which is obtainable by copolymerization of

(a) N-vinylformamide,
(b) acrylic acid, methacrylic acid and/or the alkali metal or ammonium salts thereof and, if appropriate,
(c) other monoethylenically unsaturated monomers

and subsequent partial or complete hydrolysis of the vinylformamide units present in the copolymers, in the presence of acids or bases.

3. The aqueous slurry according to claim 1 or 2, wherein said suspension comprises from 1 to 50% by weight of at least one finely divided filler and wherein the amount of the amphoteric copolymer is from 0.05 to 5% by weight, based on filler.

4. The aqueous slurry according to any of claims 1 to 3, which comprises from 10 to 40% by weight of at least one filler.

5. The aqueous slurry according to any of claims 1 to 4, wherein the amphoteric copolymers have a molar mass Mw of at least 10 000.

6. The aqueous slurry according to any of claims 1 to 5, wherein the degree of hydrolysis of the vinylcarboxamide groups incorporated in the form of polymerized units is from 10 to 98%.

7. The aqueous slurry according to any of claims 1 to 6, wherein the hydrolyzed copolymers comprise

(I) from 1 to 98, preferably from 1 to 75, mol% of vinylcarboxamide units,
(II) from 1 to 98, preferably from 1 to 55, mol% of units of at least one monoethylenically unsaturated carboxylic acid of 3 to 8 carbon atoms and
(III) from 1 to 98, preferably from 1 to 55, mol% of vinylamine and/or amidine units of the formula

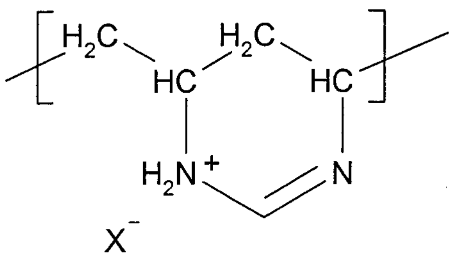

where $X^-$ is an anion, and, if appropriate,
(IV) up to 30 mol% of units of other monoethylenically unsaturated compounds which are free of nitrile groups.

8. The aqueous slurry according to any of claims 1 to 7, wherein the amphoteric copolymers comprise

(I) from 5 to 70 mol% of vinylformamide units,
(II) from 15 to 45 mol% of acrylic acid and/or methacrylic acid units and
(III) from 10 to 50 mol% of vinylamine units in salt form and amidine units of the formula

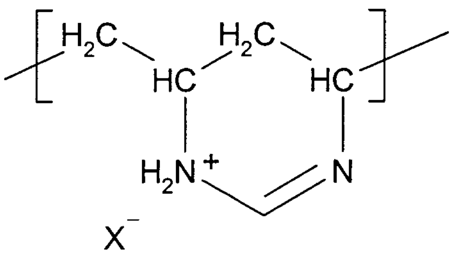

9. The aqueous slurry according to any of claims 1 to 8, wherein the amphoteric copolymers carry an excess anionic charge.

10. The aqueous slurry according to any of claims 1 to 8, wherein the amphoteric copolymers carry an excess cationic charge.

11. The aqueous slurry according to any of claims 1 to 8, wherein the amphoteric copolymers have the same amount of cationic and anionic charge.

**12.** A process for the preparation of the aqueous slurry according to any of claims 1 to 11, wherein from 0.1 to 5% by weight, based on filler, of at least one copolymer which is obtainable by copolymerization of

(a) at least one N-vinylcarboxamide of the formula

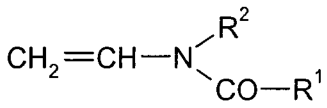
(III),

where $R^1$ and $R^2$ are H or $C_1$- to $C_6$-alkyl,
(b) at least one monoethylenically unsaturated carboxylic acid having 3 to 8 carbon atoms in the molecule and/or the alkali metal, alkaline earth metal or ammonium salts thereof and, if appropriate,
(c) other monoethylenically unsaturated monomers which are free of nitrile groups and, if appropriate,
(d) compounds which have at least two ethylenically unsaturated double bonds in the molecule

and subsequent partial or complete elimination of the groups -CO-$R^1$ from the monomers III incorporated in the form of polymerized units in the copolymer are added to an aqueous slurry of at least one finely divided filler, or the aqueous slurry of at least one finely divided filler is introduced into an aqueous solution of said amphoteric copolymer and the components are mixed in each case.

**13.** The process according to claim 12, wherein the electrophoretic mobility of the finely divided filler particles of the aqueous slurry is negative or not more than zero at a pH of 7.

**14.** The use of the aqueous slurry according to any of claims 1 to 11 as an additive to the paper stock in the production of filler-containing paper, filler-containing cardboard or filler-containing board by draining of the paper stock.

## Revendications

**1.** Suspensions aqueuses de charges finement divisées, qui sont revêtues au moins partiellement de polymères, **caractérisées en ce qu'**elles peuvent être obtenues par traitement de suspensions aqueuses de charges finement divisées par au moins un copolymère amphotère soluble dans l'eau qui peut être obtenu par copolymérisation

(a) d'au moins un amide d'acide N-vinylcarboxylique de la formule

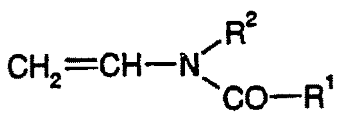
(III),

dans laquelle $R^1$, $R^2$ = H ou alkyle en $C_1$-$C_6$,
(b) d'au moins un acide carboxylique monoéthyléniquement insaturé comportant 3 à 8 atomes de C dans la molécule et/ou de ses sels de métal alcalin, de métal alcalino-terreux ou d'ammonium, et éventuellement
(c) d'autres monomères monoéthyléniquement insaturés, qui sont exempts de groupes nitrile, et éventuellement
(d) de composés qui présentent dans la molécule au moins deux doubles liaisons éthyléniquement insaturées,

et par élimination ultérieure partielle ou totale des groupes -CO-$R^1$ hors des monomères III copolymérisés dans le copolymère.

**2.** Suspensions aqueuses suivant la revendication 1, **caractérisées en ce qu'**on traite des suspensions aqueuses de charges finement divisées par un copolymère amphotère qui peut être obtenu par copolymérisation

(a) de N-vinylformamide,
(b) d'acide acrylique, d'acide méthacrylique et/ou de leurs sels de métal alcalin ou d'ammonium, et éventuellement
(c) d'autres monomères monoéthyléniquement insaturés,

et par hydrolyse ultérieure partielle ou totale des unités vinylformamide contenues dans les copolymères, en présence d'acides ou de bases.

**3.** Suspensions aqueuses suivant la revendication 1 ou 2, **caractérisées en ce qu'**elles contiennent 1 à 50 % en poids d'au moins une charge finement divisée et **en ce que** la quantité du copolymère amphotère est de 0,05 à 5 % en poids, par rapport à la charge.

**4.** Suspensions aqueuses suivant l'une des revendications 1 à 3, **caractérisées en ce qu'**elles contiennent 10 à 40 % en poids d'au moins une charge.

**5.** Suspensions aqueuses suivant l'une des revendications 1 à 4, **caractérisées en ce que** les copolymères amphotères présentent une masse molaire Mw d'au moins 10 000.

**6.** Suspensions aqueuses suivant l'une des revendications 1 à 5, **caractérisées en ce que** le degré d'hydrolyse des groupes amide d'acide vinylcarboxylique copolymérisés est de 10 à 98 %.

**7.** Suspensions aqueuses suivant l'une des revendications 1 à 6, **caractérisées en ce que** les copolymères hydrolysés contiennent

(I) 1 à 98 % molaires, de préférence 1 à 75 % molaires, d'unités d'amide d'acide vinylcarboxylique,
(II) 1 à 98 % molaires, de préférence 1 à 55 % molaires, d'unités d'au moins un acide carboxylique monoéthyléniquement insaturé comportant 3 à 8 atomes de C, et
(III) 1 à 98 % molaires, de préférence 1 à 55 % molaires, d'unités de vinylamine et/ou d'amidine de la formule

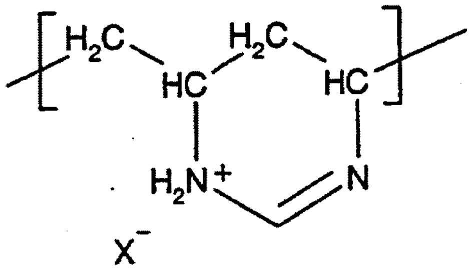

dans laquelle $X^-$ représente un anion, et éventuellement
(iv) jusqu'à 30 % molaires d'unités d'autres composés monoéthyléniquement insaturés, qui sont exempts de groupes nitrile.

**8.** Suspensions aqueuses suivant l'une des revendications 1 à 7, **caractérisées en ce que** les copolymères amphotères contiennent

(I) 5 à 70 % molaires d'unités de vinylformamide,
(II) 15 à 45 % molaires d'unités d'acide acrylique et/ou d'acide méthacrylique, et
(III) 10 à 50 % molaires d'unités de vinylamine sous la forme de sel et d'unités d'amidine de la formule

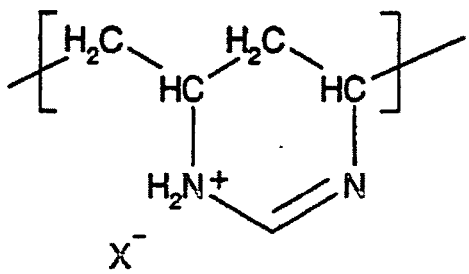

**9.** Suspensions aqueuses suivant l'une des revendications 1 à 8, **caractérisées en ce que** les copolymères amphotères portent une charge anionique en excès.

**10.** Suspensions aqueuses suivant l'une des revendications 1 à 8, **caractérisées en ce que** les copolymères amphotères portent une charge cationique en excès.

**11.** Suspensions aqueuses suivant l'une des revendications 1 à 8, **caractérisées en ce que** les copolymères amphotères présentent la même quantité de charge cationique et de charge anionique.

**12.** Procédé de préparation de la suspension aqueuse suivant les revendications 1 à 11, **caractérisé en ce qu'**à une suspension aqueuse d'au moins une charge finement divisée, on ajoute 0,1 à 5 % en poids, par rapport à la charge, d'au moins un copolymère qui peut être obtenu par copolymérisation

(a) d'au moins un amide d'acide N-vinylcarboxylique de la formule

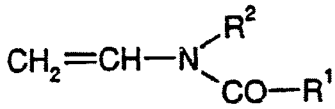

(III),

dans laquelle $R^1$, $R^2$ = H ou alkyle en $C_1$-$C_6$,
(b) d'au moins un acide carboxylique monoéthyléniquement insaturé comportant 3 à 8 atomes de C dans la molécule et/ou de ses sels de métal alcalin, de métal alcalino-terreux ou d'ammonium, et éventuellement
(c) d'autres monomères monoéthyléniquement insaturés, qui sont exempts de groupes nitrile, et éventuellement
(d) de composés qui présentent dans la molécule au moins deux doubles liaisons éthyléniquement insaturées,

et par élimination ultérieure partielle ou totale des groupes -CO-$R^1$ hors des monomères III copolymérisés dans le copolymère, ou on introduit la suspension aqueuse d'au moins une charge finement divisée dans une solution aqueuse du copolymère amphotère précité et on mélange respectivement les composants.

**13.** Procédé suivant la revendication 12, **caractérisé en ce que** la mobilité électrophorétique des particules de charge finement divisées de la suspension aqueuse est négative à un pH de 7 ou au maximum nulle.

**14.** Utilisation de la suspension aqueuse suivant les revendications 1 à 11, comme additif à de la pâte à papier lors de la fabrication de papier contenant une charge, de carton contenant une charge ou de carton-pâte contenant une charge par déshydratation de la pâte à papier.